Europäisches Patentamt

European Patent Office

Office européen des brevets

(11) Numéro de publication: **0 316 697 B1**

(19)

(12) **FASCICULE DE BREVET EUROPEEN**

(45) Date de publication de fascicule du brevet: **04.08.93** (51) Int. Cl.⁵: **G02B 6/42**

(21) Numéro de dépôt: **88118496.4**

(22) Date de dépôt: **07.11.88**

(54) Dispositif de couplage entre une fibre optique et un composant optoélectronique.

(30) Priorité: **13.11.87 FR 8715689**

(43) Date de publication de la demande:
**24.05.89 Bulletin 89/21**

(45) Mention de la délivrance du brevet:
**04.08.93 Bulletin 93/31**

(84) Etats contractants désignés:
**AT BE CH DE ES FR GB IT LI NL SE**

(56) Documents cités:
**DE-A- 3 010 820**
**DE-A- 3 411 896**
**FR-A- 2 504 693**
**FR-A- 2 584 827**
**GB-A- 2 131 971**

(73) Titulaire: **ALCATEL CIT**
**12 Rue de la Baume**
**F-75008 Paris(FR)**

(72) Inventeur: **Boisgontier, Jean Marc**
**2bis, rue Maréchal Foch**
**F-78690 Les Essarts Le Roi(FR)**
Inventeur: **Caville, Christian**
**21, Passage Duhesme**
**F-75018 Paris(FR)**

(74) Mandataire: **Weinmiller, Jürgen et al**
**Lennéstrasse 9 Postfach 24**
**W-8133 Feldafing (DE)**

EP 0 316 697 B1

# EP 0 316 697 B1

## Description

La présente invention concerne les dispositifs de couplage comportant un composant optoélectronique en forme d'une pastille de matériau semi-conducteur monté dans un boîtier et couplé optiquement à une amorce de fibre optique traversant la paroi du boîtier.

Le couplage optique entre le composant optoélectronique et l'amorce de fibre optique nécessite un positionnement très précis de l'extrémité de l'amorce de fibre optique par rapport à la pastille de matériau semi-conducteur du composant optoélectronique, un écart de l'ordre de 1 $\mu$m pouvant provoquer une perte de couplage supérieure à 3 dB dans le cas d'une fibre monomode. Ce positionnement une fois obtenu doit de plus être respecté et maintenu par les fixations du composant et de l'amorce de fibre à l'intérieur du boîtier.

D'une façon générale, on procéde d'abord à la fixation sur le fond du boîtier, de la pastille de matériau semi-conducteur du composant optoélectronique préalablement disposée sur un embase puis l'on règle le positionnement de l'extrémité de l'amorce de fibre optique par rapport à la pastille de matériau semi-conducteur en utilisant un micromanipulateur et en se guidant sur les variations du rendement du couplage optique obtenu.

La fixation de l'amorce de fibre intervient ensuite. C'est une opération délicate car sa réalisation doit entraîner aussi peu de modifications que possible du positionnement de l'extrémité de l'amorce de fibre par rapport à la pastille de matériau semi-conducteur du composant optoélectronique. Une manière de faire, décrite dans la demande de brevet français enregistrée sous le n° 8507793 consiste à fixer l'amorce de fibre d'abord en un premier point, dit point de maintien arrière, proche de son extrémité venant en regard de la pastille de matériau semi-conducteur puis en un deuxième point dit point de maintien avant, situé à la traversée de la paroi du boîtier. Le premier point de maintien, arrière, est réalisé par une brasure à bas point de fusion qui donne des possibilités de reprise et permet d'aboutir à un positionnement final proche du positionnement initial mais qui assure un maintien peu solide, insuffisamment rigide, autorisant des dèplacements élastiques ou plastiques écartant l'extrémité de l'amorce de fibre de la plage de couplage optimal dès que l'amorce est soumise à la moindre sollicitation. Le deuxième point de maintien, avant, est destiné à résister aux efforts exercés sur l'amorce de fibre depuis l'extérieur du boîtier. Il est réalisé d'une manière plus solide que le premier, par une brasure de la fibre à son passage dans un canon de traversée soudé à la paroi de la boîte.

Ce mode de fixation permet de maintenir un bon couplage optique entre le composant optoélectronique et l'amorce de fibre en l'absence d'efforts exercés sur l'amorce de fibre optique à l'intérieur du boîtier.

Malheureusement, de tels efforts apparaissent dans les conditions courantes d'utilisation du dispositif en raison de différences de dilatation entre l'amorce de fibre à l'intérieur du boîtier et le fond du boîtier apparaissant lors de variations de température, de déformations mécaniques subies par le boîtier notamment lors de sa fixation, d'efforts de traction exercés par l'intermédiaire de l'amorce de fibre à l'extérieur du boîtier.

Il est connu, par la demande de brevet français enregistrée sous le n° 8510479 de s'affranchir des efforts de traction ou de compression exercés sur l'amorce de fibre à l'intérieur du boîtier en cas de dilation ou de contraction thermique de ce dernier dans l'axe de l'amorce de fibre, en réalisant le point de maintien avant situé à la traversée de la paroi du boîtier au moyen d'un bras de compensation thermique compensant les différences de dilatation de l'amorce de fibre à l'intérieur du boîtier et du fond du boîtier. Outre le fait que le bras de compensation thermique est délicat à réaliser, ce mode de fixation à l'inconvénient de laisser subsister d'autres efforts exercés à l'intérieur du boîtier par l'amorce de fibre sur le point de maintien arrière, par exemple ceux dus à des efforts thermiques de type bilame ou à des déformations du boîtier d'origine purement mécanique.

Il est par ailleurs connu, par le document GB-A- 2 131 971 de réaliser une fixation supplémentaire de l'amorce de fibre au boîtier, en un point de maintien dit intermédiaire placé entre le point de maintien avant et le point de maintien arrière, mais dans ce document ces points de maintien sont placés sur un tube enserrant ladite amorce de fibre et non sur la fibre elle-même.

La présente invention a pour but de diminuer les efforts exercés par l'intermédiaire de l'amorce de fibre sur le point de maintien arrière dans les conditions courantes de stockage et d'utilisation du boîtier pour assurer la conservation d'un couplage optique optimal de l'amorce de fibre avec le composant optoélectronique pendant toute la durée d'utilisation du dispositif de couplage.

Elle a pour objet un dispositif de couplage entre une fibre optique et un composant optoélectronique en forme de pastille de matériau semi-conducteur comportant, outre ladite fibre optique et ledit composant optoélectronique, un boîtier renfermant ce dernier et dans lequel pénétre, au travers d'une paroi et parallèlement au fond du boîtier, la fibre optique dont une extrémité vient en couplage optique avec la pastille de matériau semi-conducteur du composant optoélectronique, et des moyens de fixation de la fibre optique au boîtier, comportant un moyen de fixation dit arrière placé sur la fibre optique au voisinage de son extrémité couplée optiquement avec la pastille de matériau semi-conducteur pour immobiliser cette extrémité dans la position de couplage, et un moyen de fixation dit avant placé sur la fibre optique à sa traversée de la paroi du boîtier pour résister aux efforts exercés sur la fibre optique depuis l'extérieur du boîtier, la fibre optique étant nue entre lesdits moyens de fixation arrière et avant, et ledit dispositif de couplage étant essentiellement caractérisé en ce que lesdits moyens de fixation comportent au moins un moyen de fixation intermédiaire placé sur la fibre entre les moyens de fixation arrière et avant pour atténuer la transmission au moyen de fixation arrière des efforts exercés sur la fibre optique par les déformations du boîtier au niveau du moyen de fixation avant.

Il est avantageux de fixer la fibre optique au boîtier au niveau du moyen de fixation intermédiaire, comme au niveau du moyen de fixation arrière, à l'aide d'une brasure à faible point de fusion et de placer le moyen de fixation intermédiaire à une distance du point de maintien avant sensiblement égale aux deux tiers de la distance séparant les moyens de fixation arrière et avant.

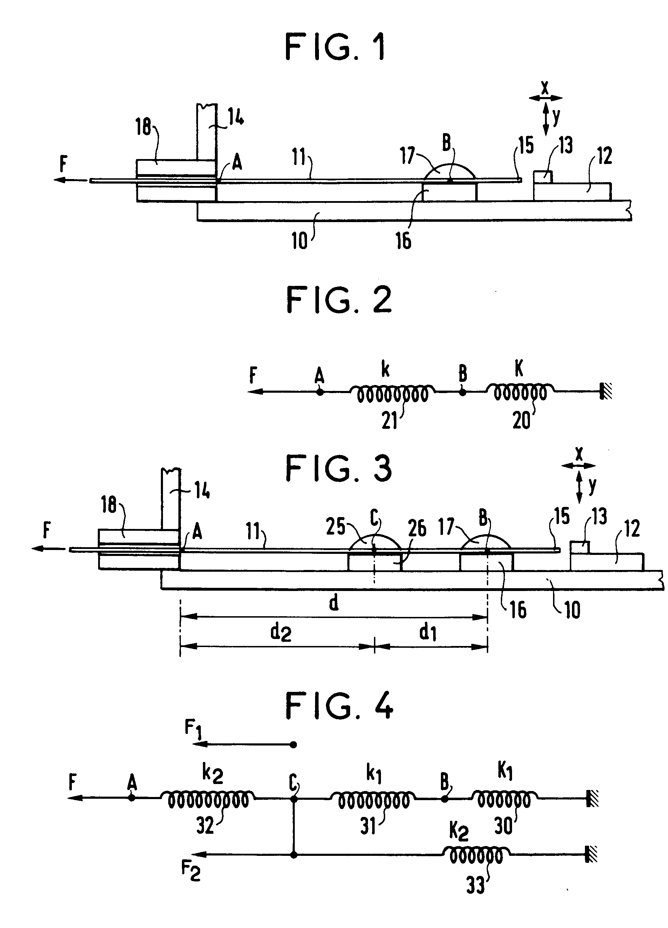

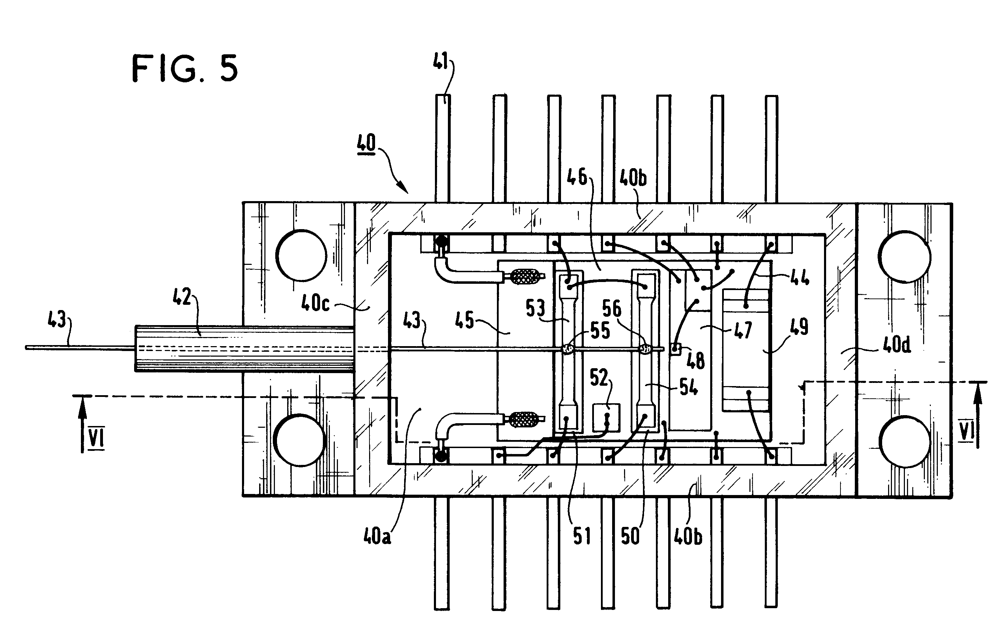

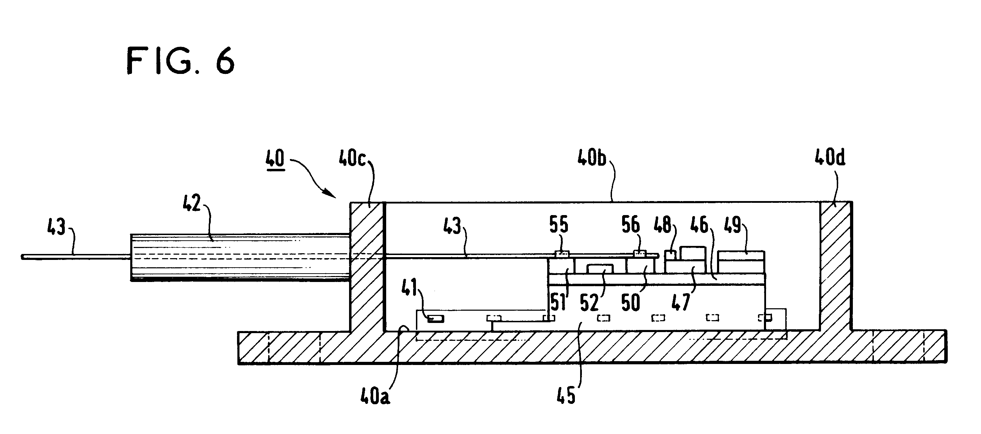

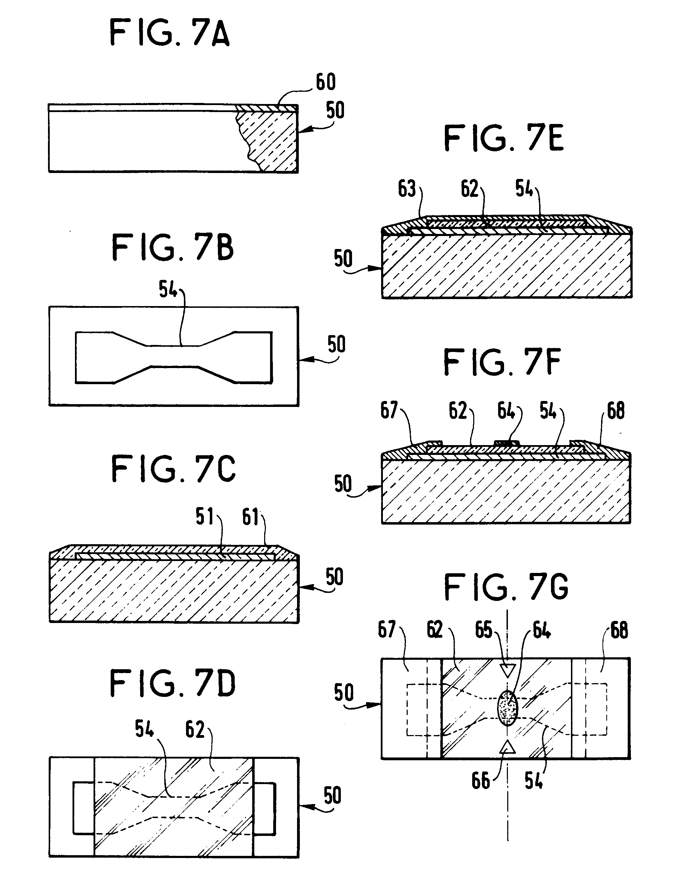

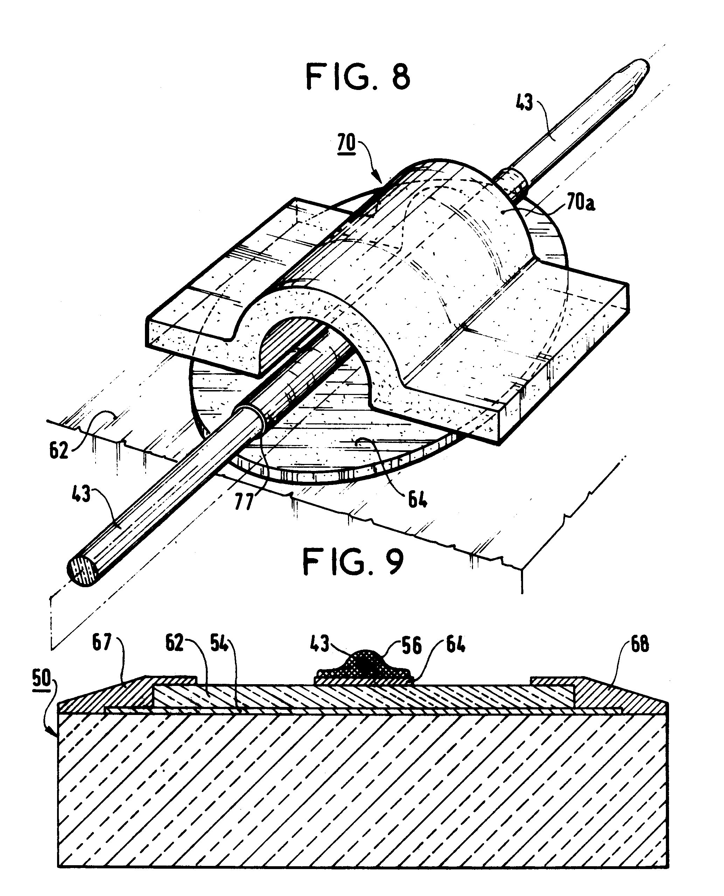

D'autres caractéristiques et avantages de l'invention ressortiront de la description ci-après d'un mode de réalisation donné à titre d'exemple. Cette description sera faite en regard du dessin dans lequel :
- une figure 1 est un schéma de principe d'une fixation d'amorce de fibre optique en deux points de maintien dans un dispositif de couplage optique connu de l'art antérieur,
- une figure 2 est un schéma d'équivalence mécanique permettant une mise en équation du système mécanique constitué par la fixation de l'amorce de fibre optique en deux points de maintien représentée à la figure 1,
- une figure 3 est un schéma de principe d'une fixation d'amorce de fibre optique en trois points de maintien dans un dispositif de couplage optique selon l'invention,
- une figure 4 un schéma d'équivalence mécanique permettant une mise en équation du système mécanique constitué par la fixation de l'amorce de fibre optique en trois points de maintien représentée à la figure 3,
- une figure 5 représente une vue de dessus d'un boîtier d'un dispositif de couplage selon l'invention avec, à l'intérieur, une pastille de matériau semi-conducteur d'un composant optoélectronique couplée à une amorce de fibre optique fixée en trois points de maintien arrière, intermédiaire et avant,
- une figure 6 représente une vue du boîtier illustré à la figure 5, en coupe verticale selon une ligne VI-VI de la figure 5;
- des figures 7A à 7G représentent un plot constituant un point de maintien arrière ou intermédiaire de fibre optique, lors d'étapes successives de formation d'un résistance à sa surface, les figures 7A, 7C, 7E et 7F étant des coupes verticales et les figures 7B, 7D et 7G des vues de dessus,
- une figure 8 représente une vue en perspective d'une aire d'accrochage pour brasure placée sur un plot de maintien d'amorce de fibre optique et représentée vu en coupe et de dessus aux figures 7F et 7G,
- et une figure 9 représente une vue d'un plot de maintien de l'amorce de fibre optique après réalisation de la fixation de l'amorce par brasure conformément aux préparatifs illustrés dans la figure 8.

La figure 1 représente le schéma de principe d'une fixation de l'amorce de fibre optique en deux points de maintien telle qu'elle est faite habituellement dans des dispositifs de couplage de l'art antérieur. On distingue un socle horizontal 10 représentant le fond d'un boîtier d'un dispositif de couplage vu en coupe, dans un plan contenant la partie de l'amorce de fibre optique 11 pénétrant dans le boîtier. Ce socle 10 porte d'un côté, par l'intermédiaire d'une embase 12, la pastille de matériau semi-conducteur 13 d'un composant optoélectronique. Il est prolongé de l'autre par une arête verticale 14 figurant la paroi latérale du boîtier traversée par l'amorce de fibre optique 11. Cette dernière est disposée dans le boîtier parallèlement au socle 10 son extrémité 15 étant placée au voisinage de la pastille de matériau semi-conducteur 13 dans une position optimale de couplage optique. Elle est fixée au boîtier c'est-à-dire au socle 10 au voisinage de son extrémité 15 en un point de maintien dit point de maintien arrière et à sa traversée de la paroi latérale du boîtier en un point de maintien dit point de maintien avant.

Au point de maintien arrière, l'amorce de fibre optique 11 repose sur le socle 10 par l'intermédiaire d'un plot 16 auquel elle est fixée par une boule de brasure à faible point de fusion 17. Au point de maintien avant, l'amorce de fibre optique 11 est brasée dans un canon de traversée 18 soudé au travers de la paroi latérale du boîtier.

A repère le centre d'application des forces exercées par le boîtier sur l'amorce de fibre optique 11 au point de maintien avant et B le centre d'application des forces exercées par l'amorce de fibre optique 11 sur sa fixation au point de maintien arrière. x repère la direction de l'axe de l'amorce de fibre à l'intérieur du boîtier en l'absence de déformations du boîtier modifiant les positions relatives des points de maintien avant et arrière et y la direction perpendiculaire à la direction x dans le plan de la figure.

Lors de déformations mécaniques du boîtier entraînant un déplacement selon la direction x et un déplacement selon la direction Y du point de maintien avant, provoquant une modification des positions relatives des points de maintien avant et arrière, il se produit d'une part un allongement ou une contraction et d'autre part une flexion de la partie de l'amorce de fibre 11 située entre les deux points de maintien avant et arrière. En première approximation, on peut considérer séparément l'effet d'un déplacement du point de maintien avant selon la direction x et l'effet d'un déplacement de ce point selon la direction y. On notera en outre que, étant donné la symétrie cylindrique du système, le comportement de celui-ci lors d'un déplacement du point de maintien avant selon la direction y est représentatif de son comportement lors d'un déplacement du point de maintien avant selon une quelconque direction perpendiculaire à la direction x.

Un déplacement X selon la direction x du point de maintien avant engendre un déplacement Xb selon cette même direction x du point de maintien arrière, ce déplacement Xb étant à l'origine d'une dégradation du couplage. Il s'exerce dans ce cas sur l'amorce de fibre optique du point A une force F parallèle à la direction x et, dans le domaine des déformations élastiques, le système mécanique constitué par la fixation de l'amorce de fibre optique en deux points est alors équivalent, comme représenté à la figure 2, à un système de deux ressorts de traction/compression 20 et 21 attachés en série au socle 10 et soumis à la force F, l'un 20 de raideur K reliant le socle 10 au point B et simulant l'élasticité en traction/compression de la fixation au point de maintien arrière, et l'autre 21 de raideur k reliant les points B et A et simulant l'élasticité en traction/compression de la partie d'amorce de fibre optique située entre les deux points de maintien avant et arrière. A l'équilibre, ce système vérifie la relation

$$KXb = k (X-Xb)$$

qui permet d'écrire :

$$Xb = \frac{X}{1 + \dfrac{K}{k}}$$

Cette dernière relation montre que pour que Xb soit petit par rapport X il faut que le coefficient de raideur de la fixation au point de maintien arrière soit grand par rapport au coefficient de raideur k de la partie d'amorce de fibre optique, ce qui se concevait intuitivement, et que Xb vaut alors sensiblement :

$$Xb = \tfrac{k}{K} X$$

Dans la pratique la raideur en traction/compression de l'amorce de fibre est de l'ordre de cent fois inférieure à celle de la fixation au point de maintien arrière de sorte que le déplacement Xb est cent fois inférieur au déplacement X c'est-à-dire donc sensiblement cent fois inférieur à la variation de longueur de l'amorce de fibre optique comprise entre les points de fixation avant et arrière. Cela est toutefois insuffisant pour que les déformations du boitier en utilisation normale n'entraînent pas de variations importantes de couplage optique.

Un déplacement Y selon la direction y du point de maintien avant provoque une flexion de la partie de l'amorce de fibre optique située entre les deux points de maintien avant et arrière. Il s'exerce dans ce cas sur la fixation au point de maintien arrière deux efforts, d'une part une force F' parallèle à la direction y, correspondant à la force de rappel du ressort de flexion que constitue la partie de l'amorce de fibre optique située entre les deux points de maintien avant et arrière et d'autre part un moment M dû au couple de flexion.

En pratique, la force F' peut être négligée. En effet, pour une amorce de fibre de silice de 125 $\mu$m de diamètre et une distance entre les points A et B, soit d, de l'ordre de 10 mm, valeurs qui se rencontrent couraament, la raideur en flexion de la partie d'amorce de fibre située entre les deux points de maintien avant et arrière est de l'ordre de $10^{-4}$ fois la raideur en traction/compression de l'amorce de fibre entre ces deux points. Poux ne pas négliger cet effort, il faudrait se placer dans le cadre d'un déplacement théorique Y dépassant largement la limite pour laquelle l' amorce de fibre se romprait.

Le système mécanique constitué par la fixation de l'amorce de fibre optique en deux points peut alors être modélisé par un système à deux ressorts analogue à celui représenté à la figure 2, les ressorts étant toutefois ici des ressorts de torsion soumis au moment M.A l'équilibre ce système vérifie la relation

G$\theta$b = g($\theta$-$\theta$b)

dans laquelle G est la constante du ressort de torsion simulant l'élasticité en flexion de la fixation au point de maintien arrière, g celle du ressort de torsion simulant l'élasticité en flexion de la partie d'amorce de fibre optique située entre les deux points de maintien avant et arrière, $\theta$ le rapport de Y à d, qui, en pratique, est petit devant 1, assimilable à la déviation angulaire de l'amorce de fibre optique au niveau du point de maintien avant et $\theta$b la déviation angulaire de l'amorce de fibre optique au niveau du point de maintien arrière provoquée par le déplacement Y.

Cette dernière relation permet d'écrire

$$\theta b = \frac{\theta}{1+\dfrac{G}{g}}$$

qui montre que, pour que $\theta$b soit petit par rapport à 0, il faut que la constante G soit grande par rapport à la constante g, et que $\theta$b vaut alors sensiblement

$$\theta b = \frac{g}{G}\theta = \frac{gY}{Gd}$$

Dans la pratique, la constante G est de l'ordre de cent fois supérieure à la constante g de sorte que la déviation angulaire $\theta$b est de l'ordre de cent fois inférieure au rapport Y/d. Cela est toutefois insuffisant pour que les déformations du boîtier provoquant une flexion de l'amorce de fibre, qui se produisent en particulier lors du bridage de boîtier sur un support, n'entraînent pas également de variations importantes de couplage optique.

La figure 3 représente le schéma de principe d'une fixation de l'amorce de fibre optique en trois points de maintien telle qu'elle est faite dans un dispositif de couplage selon l'invention. Cette figure 3 reprend les éléments de la figure 1 avec les mêmes références et montre en outre une fixation supplémentaire de l'amorce de fibre 11 en un point de maintien intermédiaire où elle est fixée par une boule de brasure à bas point de fusion 25 sur un plot 26 fixé au socle 10.

C repère un nouveau centre d'application des efforts exercés par l'amorce de fibre optique sur sa fixation au point de maintien intermédiaire.

Comme précédemment pour le cas d'une fixation de l'amorce de fibre optique en deux points de maintien, on va considérer successivement l'effet d'un déplacement du point de maintien avant selon la direction x puis celui d'un déplacement de ce point selon la direction y.

Un déplacement X selon la direction x du point de maintien avant engendre des déplacements Xc et Xb selon cette même direction des points de maintien intermédiaire et arrière, respectivement. Dans le domaine des déformations élastiques, le système mécanique constitué par cette fixation de l'amorce de fibre optique en trois points de maintien avant, arrière et intermédiaire est alors équivalent, comme représenté à la figure 4, à un système de quatre ressorts de traction/compression attachés au socle 10 et soumis à la force F, trois d'entre eux 30, 31, 32 étant attachés en série et le quatrième 33 étant attaché en parallèle sur deux des précédents 30, 31. Le premier ressort 30 de raideur K1 reliant le socle 10 au point B simule l'élasticité en traction/compression de la fixation au point de maintien arrière. Le deuxième ressort 31 de raideur k1 reliant les points B et C simule l'élasticité en traction/compression de la partie de l'amorce de fibre optique 11 située entre les points de maintien arrière et intermédiaire. Le troisième ressort 32 de raideur k2 reliant les points C et A simule l'élasticité en traction/compression de la partie de l'amorce de fibre optique 11 située entre les points de maintien intermédiaire et avant. Le quatrième ressort 32 de raideur K2 reliant le socle 10 au point C simule l'élasticité en traction/compression de la fixation au point de maintien intermédiaire. En appelant F2 la composante de la force F responsable de la déformation élastique de la fixation au point de maintien intermédiaire, F1 la composante restante de la force F, on peut écrire à l'équilibre de ce système l'ensemble des relations :

F = k2 (X-Xc)
F = F1 + F2
F2 = K2 Xc
F1 = K1 Xb

$$F1 = k1(Xc-Xb)$$

En éliminant les termes F, F1, F2 et Xc on en tire la relation :

$$\frac{X}{Xb} = 1 + \frac{K1K2}{k1k2} + \frac{K1+K2}{k2} + \frac{K1}{k1}$$

Comme les raideurs k1, k2 des portions de l'amorce de fibre optique sont inversement proportionnelles à leur longueur on peut écrire

$$k1 = k\frac{d}{d1} \text{ et } k2 = k\frac{d}{d2}$$

d1 étant la distance entre les points B et C, d2 la distance entre les points A et C.
Il vient alors :

$$\frac{X}{Xb} = 1 + \frac{K1K2 \ d1d2}{k^2d^2} + \frac{(K1+K2)d2}{kd} + \frac{K1d1}{kd} \qquad (1)$$

ou encore, en exprimant que le troisième point de maintien intermédiaire est entre les points de maintien avant et arrière :

$$d1 = d-d2$$

$$\frac{X}{Xb} = -\frac{K1K2 \ d2^2}{k^2d^2} + \left(\frac{K1K2}{k^2d} + \frac{K2}{kd}\right)d2 + \frac{K1}{k} + 1$$

La position optimale du point de maintien intermédiaire est celle pour laquelle le terme X/Xb est maximal c'est-à-dire celle pour laquelle la dérivée de l'équation précédente par rapport à d2, distance du point de maintien intermédiaire par rapport au point de maintien avant, s'annule. Cette dérivée a pour valeur :

$$-\frac{2K1 \ K2 \ d2}{k^2d^2} + \frac{K1K2}{k^2d} + \frac{K2}{kd}$$

ou encore :

$$\frac{K1K2}{k^2d}\left[-\frac{2d2}{d} + 1 + \frac{k}{K1}\right]$$

elle s'annule pour :

$$\frac{d2}{d} = \frac{1}{2}\left(1 + \frac{k}{K1}\right)$$

Le coefficient k/K1 étant très inférieur à 1 en pratique, la position optimale du point de maintien intermédiaire est sensiblement la position médiane

$$d1 = d2 = \frac{d}{2}$$

Avec un point de maintien intermédiaire en position médiane, le déplacement élastique Xb du point de maintien arrière s'exprime en fonction du déplacement X, par la relation approximative :

$$Xb = 4 \frac{k^2}{K1K2} X$$

Pour faciliter la comparaison avec la fixation usuelle à deux points de maintien, on peut se placer dans le cas d'une fixation au point de maintien intermédiaire de même raideur en traction/compression que la fixation au point de maintien arrière

$$K2 = K1 = K$$

Il vient alors

$$Xb = 4 \left(\frac{k}{K}\right)^2 X$$

En reprenant l'hypothèse pratique d'un rapport K/k de l'ordre de 100, on s'aperçoit que le déplacement Xb du point de maintien arrière est vingt cinq fois moindre que dans le cas de la fixation à deux points de maintien alors que l'on aurait pu s'attendre que l'ajout d'un point de maintien intermédiaire ne fasse que diminuer de moitié le déplacement Xb ce qui est d'ailleurs sensiblement le cas lorsque le point de maintien intermédiaire est amené contre le point de maintien arrière comme cela ressort de la relation (1) lorsque l'on fait tendre d1 vers zéro et d2 vers d.

Dans la pratique, l'étude de la relation (1) montre que le rapport X/Xb varie peu lorsque la distance d2 du point de maintien intermédiaire par rapport au point de maintien avant reste dans la plage comprise entre 0,3 et 0,7d.

Si l'on considère maintenant, pour la cas de cette fixation de l'amorce de fibre optique en trois points de maintien, un déplacement Y selon la direction y du point de maintien avant, on peut, comme pour le cas de la fixation en deux points de maintien, négliger la force parallèle à la direction y qui s'exerce sur la fixation au point de maintien arrière. Dans le domaine des déformations élastiques, le système mécanique constitué par cette fixation en trois points peut alors être modélisé par un système à quatre ressorts analogue à celui représenté à la figure 4, les ressorts étant toutefois ici des ressorts de torsion soumis au moment M. En appelant M2 la composant du moment responsable de la déformation élastique de la fixation au point de maintien intermédiaire, M1 la composante restante du moment M, $\theta c$ la déviation angulaire de l'amorce de fibre au niveau du point maintien intermédiaire, G1 et G2 les constantes des ressorts de torsion simulant l'élasticité en flexion des fixations aux points de maintien arrière et intermédiaire, respectivement, et g1 et g2 les constantes des ressorts de torsion simulant l'élasticité en flexion des portions de l'amorce de fibre optique situées entre les points de maintien arrière et intermédiaire et entre les points de maintien intermédiaire et avant, respectivement, on peut écrire à l'équilibre de ce système l'ensemble des relations :

$$M = g2 (\theta-\theta c)$$
$$M = M1 + M2$$
$$M2 = G2\theta c$$
$$M1 = G1\theta b$$
$$M1 = g1 (\theta c-\theta b)$$

En éliminant les termes M, M1, M2 et $\theta c$, on en tire la relation

$$\frac{\theta}{\theta b} = 1 + \frac{G1G2}{g1g2} + \frac{G1+G2}{g2} + \frac{G1}{g1} \qquad (2)$$

Comme les constantes g1 et g2 sont inversement proportionnelles à la longueur des portions d'amorce de fibre auxquelles elles sont relatives, on peut écrire :

$g1 = g\frac{d}{d1}$ et $g2 = g\frac{d}{d2}$

En remplaçant dans la relation (2) g1 et g2 par ces valeurs, $\theta$ par Y/d on obtient :

$$\frac{Y}{\theta b} = d2 + \frac{G1G2d1d2^2}{g^2 d^2} + \frac{(G1+G2)d2^2}{gd} + \frac{G1d1d2}{gd} \qquad (3)$$

ou encore, en tenant compte de la relation

d1 = d-d2,

$$\frac{Y}{\theta b} = d2 \left[ -\frac{G1G2d2^2}{g^2 d^2} + (\frac{G1G2}{g^2 d} + \frac{G2}{gd}) d2 + \frac{G1}{g} + 1 \right]$$

La position optimale du point de maintien intermédiaire est celle pour laquelle le rapport Y/$\theta$b est maximal. La dérivée par rapport à d2 du membre droit de l'équation précédente a pour expression :

$$-3\frac{G1G2}{g^2 d^2} d2^2 + 2(\frac{G1G2}{g^2 d} + \frac{G2}{gd}) d2 + \frac{G1}{g} + 1$$

Par rapport à d2 cette dérivée a deux racines et le rapport Y/$\theta$b présente un maximum pour celle qui a pour valeur

$$\frac{d}{3} \left[ 1 + \sqrt{1 + 2\frac{g}{G1} + 3\frac{g}{G2} + 3\frac{g^2}{G1G2} + \frac{g^2}{G1^2} + \frac{g}{G1}} \right]$$

Les termes $\frac{g}{G1}$ et $\frac{g}{G2}$ étant en pratique très petits devant 1, la position optimale du point de maintien intermédiaire est alors sensiblement donnée par :

d2 = $\frac{2}{3}$ d

Pour cette valeur de d2, la déviation angulaire $\theta$b s'exprime en fonction du déplacement Y par la relation approximative :

$$\theta b = \frac{27}{4} \frac{g^2}{G1G2} \frac{Y}{d}$$

Pour faciliter la comparaison avec la fixation usuelle à deux points de maintien, on peut se placer dans le cas d'une fixation au point de maintien intermédiaire de même raideur en flexion que la fixation au point de maintien arrière

$G_1 = G_2 = G$

il vient alors

$$\theta b = \frac{27}{4}\left(\frac{g}{G}\right)^2 \frac{Y}{d}$$

En reprenant l'hypothèse pratique d'un rapport $\frac{G}{g}$ de l'ordre de 100 on s'aperçoit que la déviation angulaire $\theta$b de l'amorce de fibre au point de maintien arrière est sensiblement quinze fois moindre que dans le cas de la fixation à deux points de maintien alors que l'on aurait pu s'attendre que l'ajout d'un point de maintien intermédiaire ne fasse que diminuer de moitié la déviation angulaire $\theta$b ce qui est d'ailleurs sensiblement le cas lorsque le point de maintien intermédiaire est amené contre le point de maintien arrière comme cela ressort de l'équation (3) lorsque l'on fait tendre d1 vers zéro et d2 vers d.

Dans la pratique, l'étude de l'équation (3) montre que le rapport $\frac{Y}{\theta b}$ varie peu lorsque la distance d2 reste dans la plage comprise entre 0,5 et 0,8 d.

Globalement, les effets des efforts exercés par la fibre sur la fixation au point de maintien arrière varient peu lorsque la distance d2 reste dans la plage comprise entre 0,5 et 0,7 d. Grâce à cette latitude, on peut optimiser la position du point de maintien intermédiaire dans cette plage en prenant en compte d'autres facteurs comme le risque de rupture de l'amorce de fibre entre les points de maintien avant et intermédiaire qui augmente avec le rapprochement de ces deux points de maintien et l'avantage qu'il y a de placer le point de maintien intermédiaire et le point de maintien arrière sur un même bloc tel par exemple, ainsi que mentionné ci-après, une plaquette fixée sur le module Peltier stabilisant la température du composant optoélectronique lorsqu'un tel module existe. Cet avantage résulte de la nécessité de ne pas provoquer de déplacements relatifs entre les points de maintien intermédiaire et arrière qui engendreraient de nouveaux efforts agissant directement sur la fixation arrière.

Compte tenu de ces considérations et de celle, le cas échéant de bien dimensionner le module Peltier, l'emplacement préféré du point de maintien intermédiaire est situé à une distance du point de maintien avant sensiblement égale aux deux tiers de la distance séparant le point de maintien arrière du point de maintien avant :

$$d2 = \frac{2}{3} d$$

En outre, pour stabiliser encore le couplage optique, le couple des points de maintien arrière et intermédiaire est centré au milieu du boîtier dans la direction de sa longueur c'est-à-dire dans la direction x.

Les figures 5 et 6 illustrent une mise en pratique de ces dispositions. On distingue le boîtier 40 du dispositif qui est constitué d'un alliage métallique soudable au verre ou à la céramique et qui comporte un fond horizontal 40a, deux parois latérales verticales 40b traversées par des pattes de connexion électrique telles que 41 avec interposition d'un isolant électrique en verre ou céramique, une paroi avant 40c pourvue à une certaine hauteur d'un canon horizontal de traversée 42 permettant l'introduction d'une amorce de fibre optique 43 et une paroi arrière 40d. Des fils conducteurs tels que 44 assurent les liaisons électriques à l'intérieur du boîtier entre les pattes de connexion 41 et les divers composants.

Sur le fond 40a du boîtier est soudé un socle 45 qui est formé d'un module à effet Peltier destiné à refroidir et réguler la température du composant optoélectronique mais qui peut être un bloc thermiquement conducteur jouant le rôle d'un dissipateur thermique. Une plaquette 46 en céramique électriquement isolante mais bonne conductrice de la chaleur, par exemple en oxyde de beryllium BeO recouvre au moins en partie le socle 45 et constitue un plateau de fixation d'environ 10 mm de long sur 7 mm de large pour les éléments du composant optoélectronique et les pièces de maintien de l'extrémité de l'amorce de fibre optique 43 couplée optiquement avec lui.

Une embase 47 en forme de barrette rectangulaire est placée sur la plaquette 46, au voisinage de la partie médiane de cette dernière du côté de la paroi arrière 40d du boîtier perpendiculairement à la direction de l'amorce de fibre optique 43. Elle est réalisée dans le même matériau céramique bon conducteur de la chaleur que la plaquette 46. Elle est fixée par brasure sur cette plaquette 46, vient à la hauteur du canon de traversée 42 et porte dans l'axe de ce dernier, une pastille de matériau semi-conducteur 48 brasée constituant une diode laser émettant un faisceau lumineux principal vers l'avant du boîtier et un faisceau lumineux auxiliaire vers l'arrière.

Une photodiode 49 est disposée sur la plaquette 46, à l'arrière de l'embase 47 dans le champ du faisceau lumineux auxiliaire de la diode laser et délivre un signal de contrôle d'intensité de faisceau lumineux destiné à un dispositif de réglage du point de fonctionnement de la diode laser.

Deux plots rectangulaires 50, 51 sont alignés sur la plaquette 46, à l'avant de l'embase 47, perpendiculairement à la direction de l'amorce de fibre optique 43. Ils viennent à la hauteur du canon de traversée 42 et servent au maintien arrière et intermédiaire de l'amorce de fibre optique 43. Pour ce faire ils sont électriquement isolants et portent à leur sommet une résistance électrique 54, 53 recouverte d'un pontet de brasure à bas point de fusion 56, 55 enjambant l'amorce de fibre optique 43 et l'emprisonnant après fusion.

Le plot rectangulaire 50 qui est le plus proche de l'extrémité de l'amorce de fibre optique 43 couplée optiquement à la pastille de matériau semi-conducteur 48 et qui sort au maintien arrière, est à une distance de l'ordre de 10 mm de l'embouchure intérieure au boîtier 40 du canon de traversée 42 qui sert au maintien avant. Le plot rectangulaire 51 qui sert au maintien intermédiaire est écarté du plot 50 d'environ 3,2 mm, les deux plots 50 et 51 étant à même distance de la section médiane du boîtier 40 dans la direction de sa longueur.

Une thermistance 52 placée entre les deux plots 50 et 51 délivre un signal de contrôle de température destiné à un dispositif de réglage du module à effet Peltier constituant le socle 45. Elle peut être omise lorsqu'un tel module n'existe pas et remplacée par un bloc thermiquement conducteur.

Les plots rectannulaires 50 et 51 sont constitués d'une céramique mauvaise conductrice de la chaleur pour que la chaleur dissipée par la résistance 54, 53 qu'ils supportent servent essentiellement à faire fondre les pontets de brasure 56, 55. Ils sont réalisés par exemple en une vitrocéramique commercialisée sous la marque MACOR par la société MINNESOTA RUBBER FRANCE d'une conductibilité thermique de 0,02 W/cm.K.

Les plots rectangulaires 50, 51 reçoivent pour la formation de leur résistance 54, 53 les traitements successifs suivants illustrés dans le cas du plot rectangulaire 50 par les figures 7A à 7G :

-   Préparation de la surface qui doit être bien lisse et dépôt d'une couche d'environ 130 nm (nanomètre) d'alliage NiCr, pour constituer une couche mince 60 d'un matériau métallique résistif (figure 7A).
-   Gravure de cette couche pour que sa partie subsistante constituè une résistance de chauffage 54 (figure 7B).
-   Dépôt d'une couche d'environ 700 nm de silice 61 (figure 7C) constituant une protection électriquement isolante.
-   Gravure de cette couche pour que sa partie subsistante 62 (figure 7D) laisse apparaître les extrémités de la résistance de chauffage 54.
-   Dépôt d'une couche d'accrochage d'environ 100 nm d'alliage NiCr surmontée d'une couche d'environ 500 nm d'or 63 (figure 7E).
-   Gravure de cette couche 63 pour que ses parties subsistantes constituent une aire d'accrochage 64 pour la brasure avec deux repères d'alignement 65, 66 de l'amorce de fibre, et des bornes 67, 68 pour la résistance de chauffage 54 (figure 7F et 7G).

L'aire d'accrochage 64 pour la brasure forme un ovale d'environ $600\mu m$ par $900\mu m$ orienté dans l'axe de l'amorce de fibre optique 43 et les repères d'alignement 65, 66 deux flèches pointées dans l'axe de l'amorce de fibre de part et d'autre, et en direction de l'ovale de l'aire d'accrochage 64.

Conformément à la figure 8, une bande préformée en forme de pontet 70 d'un matériau d'apport de brasure est posée au-dessus de l'amorce de fibre optique 43 sur l'aire d'accorchage 64. Cette bande, d'une épaisseur d'environ 0,05 mm peut-être constituée d'un alliage indium - plomb - argent (80 % d'indium, 15 % de plomb et 5 % d'argent) à bas point de fusion.

A la hauteur de l'aire d'accrochage 64, la partie de l'amorce de fibre optique 43 qui pénètre en dessous de la voûte 70a de la bande préformée 70 est revêtue d'un manchon métallique d'accrochage 77 qui peut être constitué d'une couche d'un alliage NiCr enrobée dans une couche d'or comme l'aire d'accrochage 64.

La fixation de l'amorce de fibre optique 43 au plot 50 est représentée à la figure 9 dans sa configuration définitive, après que la brasure a été effectuée.

Pour ce faire, un courant électrique à été injecté dans la résistance 54 qui a chauffé la bande de matériau d'apport de brasure jusqu'à ce quelle fonde, enrobe l'amorce de fibre optique 43 et adhère à la fois à l'aire d'accrochage 64 du plot 50 et au manchon métallique d'accrochage 77 de l'amorce de fibre optique 43. L'ensemble formé par cette bande de matériau d'apport de brasure, cette aire d'accrochage et ce manchon métallique d'accrochage est appelé ici moyen de fixation.

Le montage de l'amorce de fibre optique 43 dans le boîtier 40 du dispositif de couplage s'effectue en dernier. Il consiste tout d'abord, à introduire dans le boîtier 40, par le canon de traversée 42, une extrémité de l'amorce de fibre optique 43 préparée avec des gaines métalliques d'accrochage 77 aux emplacements approximatifs des plots 50, 51 et à amener son extrémité au voisinage de sa position de couplage optique avec la pastille de matériau semi-conducteur 48. Après cette opération, l'extrémité de l'amorce de fibre optique 43 est reprise à l'intérieur du boîtier 40 entre les pinces d'un micromanipulateur qui la saisit dans l'intervalle séparant le débouché du canon de traversée 42 du plot 51 définissant la position du point de maintien intermédiaire, à distance du plot 50 pour qu'elle puisse fléchir élastiquement sans rompre sous l'effet du retrait de la brasure sur ce plot 50. Elle est amenée grâce au micromanipulateur dans la position

EP 0 316 697 B1

de couplage optique optimale en se guidant sur les variations du couplage optique obtenu, puis soulevée dans une position de soudure tenant compte du retrait de la brasure sur le plot 50. La bande préformée de matériau d'apport de brasure est alors mise en place sur l'amorce de fibre optique 43 au niveau de l'air d'accrochage 64 du plot 50 et la brasure effectuée sur ce plot 50 ce qui réalise la fixation de l'amorce de fibre optique 43 au point de maintien arrière.

Une fois la fixation au point de maintien arrière faite, le micromanipulateur est enlevé, une bande préformée de matériau d'apport de brasure mise en place sur l'amorce de fibre optique 43 au niveau de l'air d'accrochage du plot 51 et la brasure effectuée sur ce plot 51 ce qui réalise la fixation de l'amorce de fibre 43 au point de maintien intermédiaire.

Une fois les fixations de l'amorce de fibre optique 43 aux points de maintien arrière et intermédiaire faites, l'amorce de fibre optique 43 est brasée dans le canon de traversée 42 ce qui réalise sa fixation au point de maintien avant et termine son montage.

On peut, sans sortir du cadre de l'invention modifier certaines dispositions ou remplacer certains moyens par des moyens équivalents. On peut notamment utiliser plus de deux plots pour la fixation de l'amorce de fibre dans le boîtier celle-ci étant alors maintenue en plusieurs points intermédiaires.

**Revendications**

1.  Dispositif de couplage entre une fibre optique et un composant optoélectronique en forme d'une pastille de matériau semi-conducteur (48) comportant, outre ladite fibre optique (43) et ledit composant optoélectronique, un boîtier (40) renfermant ce dernier et dans lequel pénètre, au travers d'une paroi (40c) et parallèlement au fond du boîtier, ladite fibre dont une extrémité vient en couplage optique avec la pastille de matériau semi-conducteur (48), et des moyens de fixation de la fibre optique (43) au boîtier (40), comportant un moyen de fixation dit arriere placé sur la fibre optique (43) au voisinage de son extrémité couplée optiquement avec la pastille de matériau semi-conducteur (48) pour immobiliser cette extrémité dans la position de couplage, et un moyen de fixation dit avant placé sur la fibre optique (43) à sa traversée de la paroi (40c) du boîtier (40) pour résister aux efforts exercés sur la fibre optique (43) depuis l'extérieur du boîtier (40), la fibre optique (43) étant nue entre lesdits moyens de fixation arrière et avant, caractérisé en ce que lesdits moyens de fixation comportent en outre au moins un moyen de fixation dit intermédiaire placé sur la fibre optique (43) entre les moyens de fixation arrière et avant pour atténuer la transmission au moyen de fixation arrière des efforts exercés sur la fibre (43) par les déformations du boîtier (40) au niveau du moyen de fixation avant.

2.  Dispositif selon la revendication 1, caractérisé en ce que le moyen de fixation intermédiaire est placé à une distance du moyen de fixation avant comprise entre 0,5 et 0,7 fois la distance séparant les moyens de fixation avant et arrière.

3.  Dispositif selon la revendiation 1, caractérisé en ce que le moyen de fixation intermédiaire et le moyen de fixation arrière sont placés sur un même socle (45).

**Claims**

1.  A device for coupling an optical fiber and an opto-electronic component in the form of a chip of semiconductor material (48), comprising, in addition to said optical fiber (43) and said opto-electronic component, a housing (40) containing said component and into which penetrates the fiber in traversing a wall (40c) and parallel to the bottom of the housing, with one end of the fiber coming into optical coupling with the chip of semiconductor material (48), and means for fixing the optical fiber (43) to the housing (40), comprising a rear fixing means placed on the optical fiber (43) in the vicinity of its end which is optically coupled with the chip of semiconductor material (48), in order to secure said end in its coupling position, and a front fixing means placed on the optical fiber (43), where it passes through the wall (40c) of the housing (40), in order to withstand forces exerted on the optical fiber (43) from outside the housing (40), the optical fiber (43) being stripped between said rear and front fixing means, characterized in that said fixing means further include at least one intermediate fixing means placed on the optical fiber (43) between the rear fixing means and the front fixing means in order to attenuate the transmission to the rear fixing means of the forces exerted on the fiber (43) at the front fixing means by deformation of the housing (40).

**2.** A coupling device according to claim 1, characterized in that the intermediate fixing means is placed at a distance from the front holding point lying in the range 0.5 times to 0.7 times the distance between the front and rear fixing means.

**3.** A coupling device according to claim 1, characterized in that the intermediate fixing means and the rear fixing means are placed on a common slab (45).

**Patentansprüche**

**1.** Anschlußeinrichtung zum Koppeln einer Lichtfaser mit einem optoelektronischen Element in Form eines Chips (48) aus Halbleitermaterial, die außer der Lichtfaser (43) und dem optoelektronischen Element ein Gehäuse (40), das das Element umschließt und in das die Lichtfaser durch eine Wand (40c) und parallel zum Boden des Gehäuses eintritt, wobei ein Ende der Faser in optischer Kopplungsverbindung mit dem Chip (48) aus Halbleitermaterial steht, und Mittel zur Befestigung der Lichtfaser am Gehäuse (40) aufweist, die ein auf der Lichtfaser (43) in der Nähe ihres an den Chip (48) aus Halbleitermaterial optisch angekoppelten Endes angeordnetes "hinteres" Befestigungsmittel, um dieses Ende in der Kopplungsstellung zu blockieren, und ein "vorderes" Befestigungsmittel enthalten, das auf der Lichtfaser (43) im Bereich ihrer Durchführung durch die Wand (40c) des Gehäuses (40) angeordnet ist, um den auf die Lichtfaser (43) von der Außenseite des Gehäuses (40) her ausgeübten Belastungen zu widerstehen, wobei die Lichtfaser (43) zwischen dem hinteren und dem vorderen Befestigungsmittel nackt ist, dadurch gekennzeichnet, daß die Befestigungsmittel mindestens ein weiteres Befestigungsmittel, Zwischenbefestigungsmittel genannt, umfassen, das auf der Lichtfaser (43) zwischen dem hinteren und dem vorderen Befestigungsmittel angeordnet ist, um die Weiterleitung der am vorderen Befestigungsmittel durch Verformungen des Gehäuses (40) auf die Lichtfaser (43) ausgeübten Kräfte auf das hintere Befestigungsmittel abzuschwächen.

**2.** Einrichtung nach Anspruch 1, dadurch gekennzeichnet, daß das Zwischenbefestigungsmittel in einem Abstand vom vorderen Befestigungsmittel angeordnet ist, der zwischen dem 0,5-und 0,7-fachen des Abstandes liegt, der das vordere und das hintere Befestigungsmittel voneinander trennt.

**3.** Einrichtung nach Anspruch 1, dadurch gekennzeichnet, daß das Zwischenverbindungsmittel und das hintere Verbindungsmittel auf einem gemeinsamen Sockel (45) angeordnet sind.

# FIG. 1

# FIG. 2

# FIG. 3

# FIG. 4

FIG. 5

EP 0 316 697 B1

## FIG. 6

EP 0 316 697 B1

EP 0 316 697 B1

# FIG. 7A

# FIG. 7B

# FIG. 7C

# FIG. 7D

# FIG. 7E

# FIG. 7F

# FIG. 7G

# FIG. 8

# FIG. 9